(19) Europäisches Patentamt
European Patent Office
Office européen des brevets

(11) **EP 4 316 836 A1**

(12) **EUROPEAN PATENT APPLICATION**
published in accordance with Art. 153(4) EPC

(43) Date of publication:
**07.02.2024 Bulletin 2024/06**

(21) Application number: **22775357.1**

(22) Date of filing: **16.03.2022**

(51) International Patent Classification (IPC):
**B32B 27/36** (2006.01)    **B32B 15/09** (2006.01)
**B65D 65/40** (2006.01)    **C08L 67/02** (2006.01)

(52) Cooperative Patent Classification (CPC):
**B32B 15/09; B32B 27/36; B65D 65/40; C08L 67/02**

(86) International application number:
**PCT/JP2022/012053**

(87) International publication number:
**WO 2022/202569 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2021   JP 2021050520**

(71) Applicant: **TOYOBO CO., LTD.**
**Osaka-shi, Osaka 530-0001 (JP)**

(72) Inventors:
• **TAMARI Noboru**
**Inuyama-shi, Aichi 484-8508 (JP)**
• **HARUTA Masayuki**
**Inuyama-shi, Aichi 484-8508 (JP)**

(74) Representative: **Vossius & Partner**
**Patentanwälte Rechtsanwälte mbB**
**Siebertstrasse 3**
**81675 München (DE)**

(54) **BIAXIALLY-ORIENTED POLYESTER FILM AND LAYERED BODY**

(57)    Provided is a biaxially oriented polyester film that can be suitably used for deep drawing with a metal layer stacked thereon, is excellent in adhesiveness with the metal layer and moldability, is excellent in blocking resistance, and has little curling. The film having at least a base material layer and an easily adhesive layer each containing a polyester as a main component, stacked in an order of the easily adhesive layer/ the base material layer/ the easily adhesive layer, and satisfying all of (1) to (4) below: (1) a difference between reversible heat capacity differences ΔCp at around glass transition temperatures of the easily adhesive layer and the base material layer is 0.10 or more and 0.45 or less; (2) heat sealing strength between an easily adhesive layer of the film and an easily adhesive layer of an identical film is 0.5 N/15mm or less; (3) a stress at 10% elongation F10 in each of an MD direction and a TD direction is 90 MPa or more and 160 MPa or less; and (4) a molecular orientation ratio measured by using a molecular orientation meter is 1.0 or more and 1.3 or less.

EP 4 316 836 A1

**Description**

TECHNICAL FIELD

The present invention relates to a polyester film, for molding, to be used in the field of packaging for pharmaceutical products, industrial products, and the like.

BACKGROUND ART

Polyethylene terephthalate (hereinafter, sometimes abbreviated as PET) has been used in a broad range of fields such as food packaging and industrial products since PET has excellent transparency, dimensional stability, mechanical properties, electrical properties, chemical resistance, and the like. However, as compared to, for example, nylon films, PET is hard and brittle, and thus, is sometimes difficult to mold at the time of deep drawing.

Polybutylene terephthalate (hereinafter, sometimes abbreviated as PBT) has been conventionally used as an engineering plastic because PBT has not only excellent dynamic characteristics and impact resistance but also excellent gas barrier properties and chemical resistance. PBT has a high crystallization rate, and thus productivity therefor is high. Owing to the high productivity, PBT has been used as a material that is useful as an engineering plastic. However, if PBT is used as, for example, a stretchable film, deterioration of the stretchability thereof, deterioration of the transparency thereof, and the like occur owing to crystallization.

Patent Document 1 discloses a polyester film in which a difference regarding stresses at 5% elongation in four directions on the film and a difference regarding stresses at 15% elongation in the four directions are respectively 50 MPa or less and 70 MPa, and the elastic modulus is within a range of 2.0 GPa to 3.5 GPa, so that the polyester film can be suitably used for cold molding.

In general, a crystalline polyester film tends to, owing to high crystallinity thereof, have low moldability and become less likely to have a high lamination strength. Thus, it is anticipated that lamination of the crystalline polyester film with, for example, a metal layer leads to insufficient adhesiveness therebetween. If the adhesiveness to the metal layer is low, stress generated through drawing is not dispersed during molding. Consequently, deep drawing cannot be performed. Therefore, it is highly probable that the crystalline polyester film is unfit for use in deep drawing.

Patent Document 2 discloses that a polyester film characterized in that a stress at 5% elongation F5 and a stress at 10% elongation F10 in each of a machine direction and a transverse direction of the film satisfy $1.5 \geq F10/F5 \geq 1.0$ and $F10 \geq 120$ MPa is suitably used for molding.

In order to solve the above-mentioned problem that the lamination strength of a crystalline polyester is low, an easily adhesive coat is provided on the polyester film. Consequently, the polyester film has increased adhesiveness to a metal layer so that the moldability becomes favorable. However, there are concerns that, when the polyester film is made into a film roll, blocking due to the easily adhesive coat occurs and the transparency of the film roll deteriorates owing to a lubricant having been added to the easily adhesive coat in order to impart slipperiness. In addition, since an easily adhesive coating is applied to only one side of the polyester film, there is a concern that the handleability of machining or the like due to curling of the film can deteriorate.

RELATED ART DOCUMENT

PATENT DOCUMENT

    Patent document 1: JP 6177475 B
    Patent document 2: JP 5891792 B

DISCLOSURE OF THE INVENTION

PROBLEMS TO BE SOLVED BY THE INVENTION

The present invention has been made in view of the problems of the conventional art. That is, an object of the present invention is to obtain a biaxially-oriented polyester film that can be suitably used for deep drawing with a metal layer stacked thereon, is excellent in adhesiveness with the metal layer and moldability, is excellent in blocking resistance, and has little curling.

MEANS FOR SOLVING THE PROBLEMS

The present invention is as follows.

[1] A biaxially-oriented polyester film being a layered film having at least a base material layer and two easily adhesive layers, the base material layer and the two easily adhesive layers containing a polyester as a main component, the base material layer and the two easily adhesive layers being stacked in an order of the easily adhesive layer/the base material layer/the easily adhesive layer, the biaxially-oriented polyester film satisfying all of (1) to (4) below:

(1) a difference between reversible heat capacity differences ΔCp at around glass transition temperatures of the easily adhesive layer and the base material layer is 0.10 or more and 0.45 or less;
(2) heat sealing strength between an easily adhesive layer of the biaxially-oriented polyester film and an easily adhesive layer of an identical biaxially-oriented polyester film is 0.5 N/15mm or less;
(3) a stress at 10% elongation F10 in each of an MD direction and a TD direction is 90 MPa or more and 160 MPa or less; and
(4) a molecular orientation ratio measured by using a molecular orientation meter is 1.0 or more and 1.3 or less.

[2] The biaxially-oriented polyester film according to [1], wherein the base material layer contains, as the polyester, polyethylene terephthalate in an amount of 60% by mass or more and 100% by mass or less and a polyester other than polyethylene terephthalate in an amount of 0% by mass or more and 40% by mass or less.
[3] The biaxially-oriented polyester film according to [1] or [2], wherein the easily adhesive layer contains, as the polyester, polyethylene terephthalate and a copolymerized polyethylene terephthalate, a content of ethylene glycol units in a diol component in the polyester is 75 to 95 mol%, and a content of a copolymerization component in the polyester is 5 to 25 mol%.
[4] The biaxially-oriented polyester film according to [3], wherein the content of the ethylene glycol units in the diol component in the polyester in the easily adhesive layer is 75 to 95 mol%, and a content of diethylene glycol units and/or neopentyl glycol units in the polyester in the easily adhesive layer is 5 to 25 mol%.
[5] The biaxially-oriented polyester film according to any one of [1] to [4], wherein a difference in thickness between the two easily adhesive layers in the biaxially-oriented polyester film is 1.0 μm or less.
[6] A layered body comprising: the biaxially-oriented polyester film according to any one of [1] to [5]; and a metal layer stacked on at least one face of the biaxially-oriented polyester film.
[7] The layered body according to [6], wherein the metal layer is an aluminum layer having a thickness of 80 μm or less.
[8] A deep-drawn packaging material comprising the layered body according to [7].

EFFECTS OF THE INVENTION

Regarding the biaxially-oriented polyester film of the present invention, by setting the reversible heat capacity difference ΔCp at around glass transition temperatures of the easily adhesive layer and the base material layer, the stress at 10% elongation F10 in the MD direction and the TD direction, the heat sealing strength between the easily adhesive layers, and the molecular orientation ratio to fall within predetermined ranges, it is possible to obtain a biaxially-oriented polyester film that is excellent in adhesiveness with a metal layer, moldability, and blocking resistance, and has little curling, and thus is excellent in deep drawability.

BRIEF DESCRIPTION OF THE DRAWINGS

FIG. 1 is a view showing a stretch pattern of a logarithmic form in the TD direction of a film.
FIG. 2 is a view showing a stretch pattern of an exponential form in the TD direction of the film.
FIG. 3 is a view showing a measurement example of a reversible heat capacity difference ΔCp.
FIG. 4 is a plan view of a mold used for evaluating deep drawability of a layered body.
FIG. 5 is an A-A' sectional view of the mold used for evaluating the deep drawability of the layered body.

DESCRIPTION OF EMBODIMENTS

Hereinafter, the present invention will be described in detail.

[Base material layer]

The base material layer of the biaxially-oriented polyester film of the present invention contains a PET resin as a main component, and a content of PET is 60% by mass or more, preferably 70% by mass, and more preferably 80% by mass. Setting the content of PET to be 60% by mass or more enables the obtained biaxially-oriented polyester film to have an increased stress at 10% elongation F 10 in a machine direction and a transverse direction and leads to improvement in deep drawability. In addition, the biaxially-oriented polyester film comes to have favorable transparency and gives, when printing is performed thereon, a clear view of the print, and thus can be suitably used. In addition, since the PET resin which is comparatively inexpensive is contained as a main component, cost is reduced.

A polyester other than PET can be contained in the base material layer of the biaxially-oriented polyester film of the present invention for the purpose of adjusting the dynamic characteristics and the stretchability thereof. Examples of the polyester other than PET include polyesters such as polyethylene terephthalate PBT, polyethylene naphthalate PEN, polybutylene naphthalate PBN, and polypropylene terephthalate PPT. The polyester other than PET may be a copolymerized polyester with PET or the above-mentioned polyesters, and examples of the copolymerized polyester include: polyesters obtained by copolymerizing dicarboxylic acids such as isophthalic acid, orthophthalic acid, naphthalenedicarboxylic acid, biphenyldicarboxylic acid, cyclohexane dicarboxylic acid, adipic acid, azelaic acid, and sebacic acid; and polyesters obtained by copolymerizing diol components such as ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol.

Among these, PBT has excellent dynamic characteristics, and addition of a small amount of PBT leads to favorable stretchability. In addition, PBT enables decrease in an upper yield stress in a stress-strain curve of the obtained biaxially-oriented polyester film. A lower upper yield stress enables the degree of local stretching to be lower at the time of drawing, and as a result, enables deep drawing to a larger depth. In addition, PBT is highly compatible with the PET resin and has excellent transparency, and thus is preferable.

The polyester other than PET does not have to be contained. However, containing the polyester other than PET in an amount of 10% by mass or more enables stretchability at the time of film production to be favorable. In addition, the containing also enables the moldability of the film to be favorable. The upper limit of the content of the polyester other than PET is 40% by mass or less, preferably 30% by mass or less, and more preferably 20% by mass or less.

The lower limit of the intrinsic viscosity of the PET is preferably 0.45 dl/g, more preferably 0.50 dl/g, and most preferably 0.55 dl/g. Setting the intrinsic viscosity to be 0.45 dl/g or more enables the intrinsic viscosity of the obtained biaxially-oriented polyester film to be kept high as well and enables the stress at 10% elongation F10 in each of the machine direction and the transverse direction to be easily increased. The upper limit of the intrinsic viscosity is preferably 0.80 dl/g, more preferably 0.75 dl/g, and most preferably 0.70 dl/g. Setting the intrinsic viscosity to be 0.80 dl/g or less enables suppression of excessive increase in a stress at the time of film stretching so that favorable film producibility can be obtained. The intrinsic viscosity of the polyester other than PET is preferably an intrinsic viscosity that allows the melt viscosity of PET and the melt viscosity of the polyester other than PET to be approximately equal to each other in an extruder.

[Easily adhesive layer]

The easily adhesive layer of the biaxially-oriented polyester film of the present invention contains a PET resin as a main component. Containing PET as a main component enables the easily adhesive layer to have increased adhesiveness to the base material layer and enables suppression of decrease, in the lamination strength, due to delamination between the easily adhesive layer and the base material layer.

It is preferable to add a copolymerized polyester to the easily adhesive layer of the biaxially-oriented polyester film of the present invention, for the purpose of increasing the adhesiveness of the easily adhesive layer to a metal layer. A copolymerized polyethylene terephthalate is particularly preferable. Examples of the copolymerized polyester include: polyester resins obtained by copolymerizing dicarboxylic acids such as isophthalic acid, orthophthalic acid, naphthalenedicarboxylic acid, biphenyldicarboxylic acid, cyclohexane dicarboxylic acid, adipic acid, azelaic acid, and sebacic acid as a dicarboxylic acid component; and/or polyesters obtained by copolymerizing diol components such as diethylene glycol, ethylene glycol, 1,3-propylene glycol, 1,2-propylene glycol, neopentyl glycol, 1,5-pentanediol, 1,6-hexanediol, cyclohexanediol, polyethylene glycol, polytetramethylene glycol, and polycarbonate diol as a diol component. In the present invention, it is preferable to use a copolymerized polyethylene terephthalate obtained by copolymerizing diethylene glycol and/or neopentyl glycol as a diol component, besides polyethylene terephthalate.

The lower limit of the content of the copolymerization component of the copolymerized polyester in the easily adhesive layer with respect to the dicarboxylic acid units or the diol units is preferably 5 mol%, more preferably 8 mol%, and most preferably 11 mol%. Setting the content of the copolymerization component to be 5 mol% or more enables the obtained biaxially-oriented polyester film to have an increased lamination strength, and enables the adhesiveness to a metal layer to be made sufficient. The upper limit of the content of the copolymerization component with respect to the dicarboxylic acid units or the diol units is preferably 25 mol%, more preferably 22 mol%, and most preferably 19 mol%. Setting the content of the copolymerization component to be 25 mol% or less results in increase in a reversible heat capacity difference $\Delta Cp$ of the easily adhesive layer, and consequently enables suppression of occurrence of blocking when the obtained film is made into a roll. In addition, the setting of the content of the copolymerization component to be 25 mol% or less enables suppression of decrease in the stress at 10% elongation F10 in each of the machine direction and the transverse direction.

[Additives]

The biaxially-oriented polyester film of the present invention may contain, in addition to the polyester resin composition, conventionally known additives, e.g., a lubricant, a stabilizer, a colorant, an antioxidant, an antistatic agent, an ultraviolet absorber, and the like.

When the entire biaxially-oriented polyester film of the present invention is 100% by mass, the content of the polyester resin composition is preferably 99.5% by mass or more, more preferably 99.6% by mass or more, and most preferably 99.7% by mass or more.

The lubricant can adjust the dynamic coefficient of friction of the film, and examples thereof include inorganic lubricants such as silica, calcium carbonate, and alumina, and organic lubricants. Among these lubricants, silica and calcium carbonate are preferable, and, from the viewpoint of achieving both transparency and slipperiness, porous silica is most preferable.

The lower limit of the lubricant content of the biaxially-oriented polyester film of the present invention is preferably 100 ppm by mass, more preferably 300 ppm by mass, and most preferably 500 ppm by mass. Setting the lubricant content to be 100 ppm by mass or more enables the slipperiness of the film to be made favorable, enables suppression of sealing strength between easily adhesive layers, and enables suppression of blocking when the film is made into a roll.

The upper limit of the lubricant content of the biaxially-oriented polyester film of the present invention is preferably 10000 ppm by mass, more preferably 6000 ppm by mass, and most preferably 2000 ppm by mass. Setting the lubricant content to be 10000 ppm by mass or less enables the transparency of the film to be made favorable.

[Method for producing biaxially-oriented polyester film]

A method for obtaining the biaxially-oriented polyester film of the present invention is not particularly limited, but a T-die method is preferable from the viewpoint of obtaining the stress at 10% elongation F 10 in each of the machine direction and the transverse direction. In an inflation method, owing to the production method therein, a stretch ratio is less likely to increase, whereby F10 may be less likely to increase.

The upper limit of the temperature of a cooling roll is preferably 40°C, and more preferably 20°C or lower. When the temperature is 40°C or lower, the degree of crystallinity at the time of cooling and solidifying the polyester resin composition having been melted is prevented from excessively increasing. Consequently, stretching can be more easily performed, and decrease in the transparency due to crystallization can also be suppressed. The lower limit of the temperature of the cooling roll is preferably 0°C. When the temperature is 0°C or higher, the effect of suppressing crystallization at the time of cooling and solidifying the polyester resin composition having been melted can be sufficiently exhibited. In addition, in the case of setting the temperature of the cooling roll to fall within the above range, the humidity in the environment around the cooling roll is preferably decreased in order to prevent dewing.

The thickness of an unstretched sheet is suitably in a range of 15 to 2500 $\mu$m. The thickness is more preferably 600 $\mu$m or less and most preferably 400 $\mu$m or less.

The stretching method can be a simultaneous biaxial stretching method or a sequential biaxial stretching method. From the viewpoint of controlling the molecular orientation in the transverse direction described later, sequential biaxial stretching is preferably used.

The lower limit of the temperature for stretching in the machine direction (hereinafter, also referred to as MD direction) is preferably 90°C, more preferably 95°C, and particularly preferably 100°C. When the temperature is 90°C or higher, break can be further suppressed. The upper limit of the temperature for stretching in the MD direction is preferably 140°C, more preferably 135°C, and particularly preferably 130°C. When the temperature is 140°C or lower, the stress at 10% elongation F10 in the MD direction can be increased, whereby the deep drawability becomes favorable.

The lower limit of the stretch ratio in the MD direction is preferably 3.5 times, more preferably 3.6 times, and particularly preferably 3.7 times. When the stretch ratio is 3.5 times or more, the stress at 10% elongation F10 in the MD direction can be increased, whereby the deep drawability becomes favorable. In addition, since the sealing strength can be suppressed, blocking resistance becomes favorable. The upper limit of the stretch ratio in the MD direction is preferably 4.5 times, more preferably 4.4 times, and particularly preferably 4.3 times. When the stretch ratio is 4.5 times or less, the effect of improving the stress at 10% elongation F10 in the MD direction is sufficiently obtained.

The lower limit of the temperature for stretching in the transverse direction (hereinafter, also referred to as TD direction) is preferably 100°C, more preferably 105°C, and particularly preferably 110°C. When the temperature is 100°C or higher, break can be made less likely to occur. The upper limit of the temperature for stretching in the TD direction is preferably 140°C, more preferably 135°C, and particularly preferably 130°C. When the temperature is 140°C or lower, the stress at 10% elongation F10 in the TD direction can be increased, whereby the deep drawability becomes favorable.

The lower limit of the stretch ratio in the TD direction is preferably 3.5 times, more preferably 3.6 times, and particularly preferably 3.7 times. When the stretch ratio is 3.5 times or more, the stress at 10% elongation F10 in the TD direction can be increased, whereby the deep drawability becomes favorable. In addition, since the sealing strength can be suppressed, the blocking resistance becomes favorable. The upper limit of the stretch ratio in the TD direction is preferably 4.5 times, more preferably 4.4 times, and particularly preferably 4.3 times. When the stretch ratio is 4.5 times or less, the effect of improving the stress at 10% elongation F10 in the TD direction is sufficiently obtained.

As will be described later, the biaxially-oriented polyester film of the present invention preferably has a molecular orientation ratio, measured using a molecular orientation meter, of 1.0 or more and 1.3 or less. Having the molecular orientation ratio within the predetermined range achieves favorable deep drawability for drawing of various shapes. Specifically, the stretch ratio in the MD direction, namely MD ratio, and the stretch ratio in the TD direction, namely TD ratio, preferably satisfy the following expression.

$$0.9 \leq \text{TD ratio/MD ratio} \leq 1.2$$

Being in this range enables the molecular orientation ratio to fall within the range described in the claims, and favorable deep drawability is obtained for drawing of various shapes.

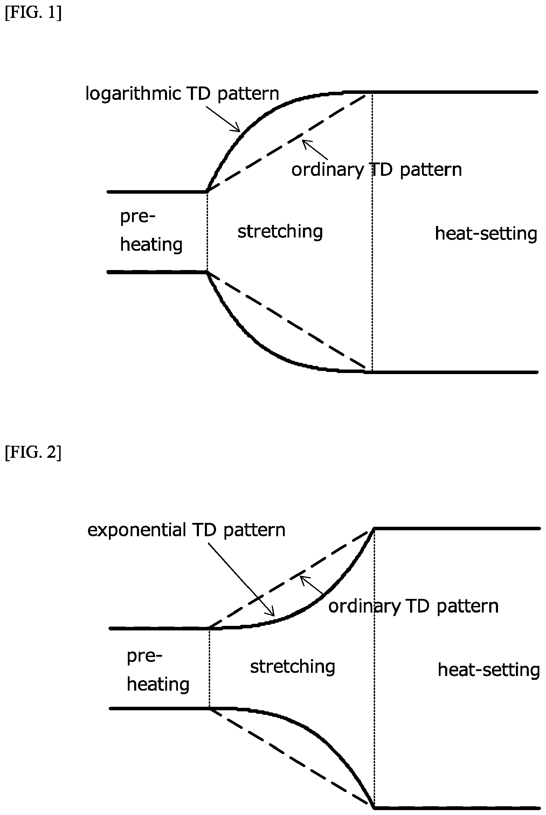

In order to set the molecular orientation ratio to fall within a predetermined range, in addition to the method of making the stretch ratio fall within a predetermined range described in the foregoing item, there is also a method of making the TD stretch pattern logarithmic or exponential. That is, as specifically shown in FIG. 1 (logarithmic pattern), while an ordinary TD stretch pattern is a linear pattern, the logarithmic pattern is a TD stretch pattern in which the biaxially-oriented polyester film is sharply stretched in the first half of stretching and is mildly stretched in the second half of stretching. Use of such a TD stretch pattern makes it possible to, in the first half in which the stretching stress of the film is low, complete the majority of the stretching and suppress the orientation in the TD direction. On the other hand, as shown in FIG. 2 (exponential pattern), the exponential pattern is a TD stretch pattern in which the biaxially-oriented polyester film is mildly stretched in the first half of stretching and is sharply stretched in the second half of stretching. Use of such a TD stretch pattern makes it possible to, in the second half in which the stretching stress of the film is high, complete the majority of the stretching and enhance the orientation in the TD direction. The TD stretch pattern may be appropriately selected so that the molecular orientation ratio of the obtained biaxially-oriented polyester film falls within the specified range.

The lower limit of a heat-setting temperature is preferably 170°C, more preferably 175°C, and particularly preferably 180°C. When the heat-setting temperature is 170°C or higher, a heat shrinkage rate can be more decreased. The upper limit of the heat-setting temperature is preferably 210°C, more preferably 205°C, and particularly preferably 200°C. When the heat-setting temperature is 210°C or lower, it is possible to suppress decrease, due to relaxation of molecular orientation, of the stress at 10% elongation F10 in each of the machine direction and the transverse direction, whereby the deep drawability becomes favorable. Also, it is possible to prevent impairment of blocking resistance caused by increase in the sealing strength as a result of the easily adhesive layer melting by a heat treatment at high temperature.

In a thermal relaxation step, the lower limit of a relaxation rate is preferably 0.5%, more preferably 1.0%, and particularly preferably 2.0%. When the relaxation rate is 0.5% or more, the heat shrinkage rate in the TD direction can be kept low. The upper limit of the relaxation rate is preferably 10%, more preferably 8%, and particularly preferably 6%. When the relaxation rate is 10% or less, sagging or the like can be prevented from occurring, whereby flatness can be improved.

[Configuration and characteristics of biaxially-oriented polyester film]

The lower limit of the thickness of the biaxially-oriented polyester film of the present invention is preferably 5 $\mu$m, more preferably 10 $\mu$m, and particularly preferably 15 $\mu$m. Setting the thickness to be 5 $\mu$m or more enables the strength of the film to be maintained, whereby the deep drawability becomes favorable. The upper limit of the thickness is preferably 50 $\mu$m, more preferably 40 $\mu$m, and particularly preferably 30 $\mu$m. Setting the thickness to be 50 $\mu$m or less enables cold molding.

The lower limit of the thickness of the base material layer of the biaxially-oriented polyester film of the present invention is preferably 60%, more preferably 70%, and particularly preferably 80% with respect to the entire thickness of the biaxially-oriented polyester film. Setting the thickness to be 60% or more enables increase in the stress at 10% elongation F10 in each of the machine direction and the transverse direction, whereby the deep drawability becomes favorable. The upper limit of the thickness of the base material layer is preferably 96%, more preferably 90%, and particularly preferably 86% with respect to the entire thickness of the biaxially-oriented polyester film. Setting the thickness to be 96% or less enables obtainment of the effect of improving the adhesiveness of the easily adhesive layer to a metal layer, whereby the deep drawability becomes favorable.

The lower limit of the thickness of the easily adhesive layer of the biaxially-oriented polyester film of the present invention is preferably 4%, more preferably 8%, and particularly preferably 12% with respect to the entire thickness of the biaxially-oriented polyester film. Setting the thickness to be 4% or more enables obtainment of the effect of improving the adhesiveness to a metal layer, whereby the deep drawability becomes favorable. The upper limit of the thickness of the easily adhesive layer is preferably 40%, more preferably 30%, and particularly preferably 20% with respect to the entire thickness of the biaxially-oriented polyester film. Setting the thickness to be 40% or less enables increase in the stress at 10% elongation F10 in each of the machine direction and the transverse direction, whereby the deep drawability becomes favorable. The thickness of the easily adhesive layer mentioned herein refers to the total of thicknesses of easily adhesive layers on both sides in the easily adhesive layer/base material layer/easily adhesive layer.

The upper limit of the thickness difference between the easily adhesive layers is preferably 1.0 $\mu$m. The thickness difference between the easily adhesive layers is more preferably 0.8 $\mu$m or less, and particularly preferably 0.6 $\mu$m. Setting the thickness difference to be 1.0 $\mu$m or less enables suppression of curling of the film, and improves the handleability in machining or the like.

The upper limit of the reversible heat capacity difference $\Delta$Cp at around a glass transition temperature of the base material layer of the biaxially-oriented polyester film of the present invention is preferably 0.05, more preferably 0.03, and particularly preferably 0.01. Setting the reversible heat capacity difference $\Delta$Cp to be 0.05 or less makes the base material layer sufficiently rigid and enables increase in the stress at 10% elongation F10 in each of the machine direction and the transverse direction.

The lower limit of the reversible heat capacity difference $\Delta$Cp at around a glass transition temperature of the easily adhesive layer of the biaxially-oriented polyester film of the present invention is preferably 0.10, more preferably 0.15, and particularly preferably 0.20. Setting the reversible heat capacity difference $\Delta$Cp to be 0.10 or more enables obtainment of the effect of improving the adhesiveness to a metal layer, whereby the deep drawability becomes favorable. The upper limit of the reversible heat capacity difference $\Delta$Cp at around the glass transition temperature of the easily adhesive layer of the biaxially-oriented polyester film of the present invention is preferably 0.45, more preferably 0.40, and particularly preferably 0.35. Setting the reversible heat capacity difference $\Delta$Cp to be 0.45 or less enables suppression of occurrence of blocking when the biaxially-oriented polyester film is made into a film roll.

The lower limit of the difference between the reversible heat capacity differences $\Delta$Cp at around the glass transition temperatures of the base material layer and the easily adhesive layer of the biaxially-oriented polyester film of the present invention is preferably 0.10, more preferably 0.15, and particularly preferably 0.20. Setting the difference therebetween to be 0.10 or more enables obtainment of the effect of improving the adhesiveness to a metal layer. Consequently, the deep drawability becomes favorable, and moreover, the base material layer becomes sufficiently rigid so that the stress at 10% elongation F10 in each of the machine direction and the transverse direction can be increased. The upper limit of the difference between the reversible heat capacity differences $\Delta$Cp at around the glass transition temperatures of the base material layer and the easily adhesive layer of the biaxially-oriented polyester film of the present invention is preferably 0.45, more preferably 0.40, and particularly preferably 0.35. Setting the difference therebetween to be 0.35 or less enables suppression of occurrence of blocking when the biaxially-oriented polyester film is made into a film roll.

The reversible heat capacity difference $\Delta$Cp at around the glass transition temperatures corresponds to a mobile amorphous content obtained when a reversible heat capacity curve is measured by using a temperature-modulated differential scanning calorimeter. When a reversible heat capacity curve regarding a film sample is measured by using a temperature-modulated differential scanning calorimeter, a baseline of the reversible heat capacity curve is shifted at a temperature corresponding to a glass transition temperature. The difference between a value before the shift and a value after the shift is referred to as the reversible heat capacity difference $\Delta$Cp and corresponds to a mobile amorphous content by which molecular chains can move at around the glass transition temperature in an amorphous region of the biaxially-oriented polyester film. The difference between the reversible heat capacity differences $\Delta$Cp at around the glass transition temperatures of the base material layer and the easily adhesive layer of the biaxially-oriented polyester film of the present invention indicates the difference between the mobile amorphous contents of the base material layer and the easily adhesive layer.

The upper limit of the molecular orientation ratio of the biaxially-oriented polyester film of the present invention is preferably 1.30, more preferably 1.25, and particularly preferably 1.20. Setting the molecular orientation ratio to be 1.30 or less makes the deep drawability favorable for drawing into various shapes. The molecular orientation ratio refers to the ratio (maximum value/minimum value) of the maximum value to the minimum value of microwave intensity measured by a molecular orientation meter. The lower limit of the molecular orientation ratio is preferably 0.90, more preferably 0.95, and particularly preferably 1.00. Setting the molecular orientation ratio to be 0.90 or more makes the deep drawability favorable for drawing into various shapes.

The lower limit of the stress at 10% elongation F10 in the MD direction of the biaxially-oriented polyester film of the present invention is preferably 90 MPa, more preferably 95 MPa, and particularly preferably 100 MPa. Setting the stress at 10% elongation F10 in the MD direction to be 90 MPa or more enables dispersion of the stress at the time of drawing, whereby the deep drawability becomes favorable. The upper limit of the stress at 10% elongation F10 in the MD direction is preferably 160 MPa, more preferably 155 MPa, and particularly preferably 150 MPa. Setting the stress at 10% elongation F10 in the MD direction to be 160 MPa or less enables inhibition of troubles such as break during film production.

The lower limit of the stress at 10% elongation F10 in the TD direction of the biaxially-oriented polyester film of the present invention is preferably 90 MPa, more preferably 95 MPa, and particularly preferably 100 MPa. Setting the stress at 10% elongation F10 in the TD direction to be 90 MPa or more enables dispersion of the stress at the time of drawing, whereby the deep drawability becomes favorable. The upper limit of the stress at 10% elongation F10 in the TD direction is preferably 160 MPa, more preferably 155 MPa, and particularly preferably 150 MPa. Setting the stress at 10% elongation F10 in the TD direction to be 160 MPa or less enables inhibition of troubles such as break during film production.

The upper limit of the haze of the biaxially-oriented polyester film of the present invention is preferably 5.0%, more preferably 4.5%, and particularly preferably 4.0%. Setting the haze to be 5.0% or less is preferable since a print can be clearly seen by doing so.

The lower limit of the dynamic coefficient of friction of the biaxially-oriented polyester film of the present invention is preferably 0.2, more preferably 0.25, and particularly preferably 0.30. Setting the dynamic coefficient of friction to be 0.20 or more can result in increase in transparency, whereby the appearance becomes favorable. The upper limit of the dynamic coefficient of friction is preferably 0.55, more preferably 0.50, and particularly preferably 0.45. Setting the dynamic coefficient of friction to be 0.55 or less leads to favorable slipperiness of the film and enables suppression of blocking.

The lower limit of the heat shrinkage rate in the MD direction of the biaxially-oriented polyester film of the present invention is preferably 1.0%, more preferably 1.5%, and particularly preferably 2.0%. Setting the heat shrinkage rate in the MD direction to be 1.0% or more can result in increase in the stress at 10% elongation F10 in the machine direction, whereby the deep drawability becomes favorable. The upper limit of the heat shrinkage rate is preferably 6.0%, more preferably 5.5%, and particularly preferably 5.0%. Setting the heat shrinkage rate to be 6.0% or less enables decrease in troubles regarding machining due to shrinkage of the film in a step such as a printing step.

The lower limit of the heat shrinkage rate in the TD direction of the biaxially-oriented polyester film of the present invention is preferably -1.0%, more preferably -0.5%, and particularly preferably 0%. Setting the heat shrinkage rate in the TD direction to be -1.0% or more can result in increase in the stress at 10% elongation F10 in the transverse direction, whereby the deep drawability becomes favorable. The upper limit of the heat shrinkage rate in the TD direction is preferably 5.0%, more preferably 4.5%, and particularly preferably 4.0%. Setting the heat shrinkage rate in the TD direction to be 5.0% or less enables decrease in troubles regarding machining due to shrinkage of the film in a step such as a printing step.

The upper limit of the heat sealing strength when the easily adhesive layers of the biaxially-oriented polyester film of the present invention are sealed at 120°C is 0.5 N/15 mm, more preferably 0.4 N/15 mm, and particularly preferably 0.3 N/15 mm. Setting the heat sealing strength to be 0.5 N/15 mm or less enables suppression of blocking when, for example, the film is wound as a roll with heat directly after application of heat in printing or machining.

A print layer may be stacked on the biaxially-oriented polyester film of the present invention. As a print ink for forming the print layer, an aqueous and solvent-based resincontaining print ink can be preferably used. Here, examples of the resin used for the print ink include acrylic-based resins, urethane-based resins, polyester-based resins, vinyl chloride-based resins, vinyl acetate copolymer resins, and mixtures of these resins. The print ink may contain known additives such as an antistatic agent, a light-blocking agent, an ultraviolet absorption, a plasticizer, a lubricant, a filler, a colorant, a stabilizer, a lubricating agent, a defoamer, a crosslinking agent, an anti-blocking agent, and an antioxidant.

A printing method for providing the print layer is not particularly limited, and a known printing method such as an offset printing method, a gravure printing method, or a screen printing method can be employed. For drying the solvent after printing, a known drying method such as a hot air drying method, a heat roll drying method, or an infrared drying method can be employed.

A layer made from another material may be stacked on the biaxially-oriented polyester film of the present invention. As the method, it is possible to employ: a method in which the layer is pasted after the biaxially-oriented polyester film is produced; or a method in which the layer is pasted during film production.

The biaxially-oriented polyester film of the present invention can be used as a packaging material by forming a heat-sealable resin layer called a sealant (also referred to as sealant layer) on the surface of at least one of the easily adhesive layers. The sealant layer is ordinarily formed through an extrusion lamination method or a dry lamination method. A thermoplastic copolymer for forming the heat-sealable resin layer only has to be one that can sufficiently exhibit sealant adhesiveness, and it is possible to use: a polyethylene resin such as HDPE, LDPE, or LLDPE; a polypropylene resin; an ethylene-vinyl acetate copolymer; an ethylene-$\alpha$-olefin random copolymer; an ionomer resin; or the like.

The sealant layer may be a single-layer film or a multilayer film and only has to be selected according to a required function. For example, from the viewpoint of imparting moisture resistance, it is possible to use a multilayer film in which a resin such as an ethylenecyclic olefin copolymer or polymethylpentene is interposed. In addition, various additives such as a flame retardant, a slipping agent, an anti-blocking agent, an antioxidant, a light stabilizer, and a tackifier may be blended in the sealant layer. The thickness of the sealant layer is preferably 10 to 100 $\mu$m and more preferably 20 to 60 $\mu$m.

One preferred embodiment of the present invention is a layered body in which a metal layer is stacked on the surface of at least one of the easily adhesive layers of the biaxially-oriented polyester film. The metal layer may be stacked so as to be in direct contact with the biaxially-oriented polyester film of the present invention or may be stacked on the biaxially-oriented polyester film with another layer such as an adhesive layer interposed therebetween. When the sealant layer is provided in the film, the metal layer is preferably stacked on a surface opposite to the sealant layer. A sealant layer may further be provided on the metal layer.

As the metal layer, a metal foil and/or an inorganic thin film layer can be used.

When a metal foil is used as the metal layer, various metal elements such as aluminum, iron, copper, nickel, and the like can be raised as examples, and an aluminum foil is particularly preferable. Although the thickness of the metal layer is not particularly limited, the thickness is preferably 15 $\mu$m to 80 $\mu$m and particularly preferably 20 $\mu$m to 60 $\mu$m from the viewpoint of deep drawability.

When an inorganic thin film layer is used as the metal layer, the material for forming the inorganic thin film layer is not particularly limited as long as the material can be made into a thin film. From the viewpoint of gas barrier properties, preferable examples of the material include aluminum and inorganic oxides such as silicon oxide (silica), aluminum oxide (alumina), and a mixture of silicon oxide and aluminum oxide. From the viewpoint of enabling achievement of both flexibility and denseness of the thin film layer, a composite oxide of silicon oxide and aluminum oxide is particularly preferable. The film thickness of the inorganic thin film layer is usually 1 to 100 nm, and preferably 5 to 50 nm. When the film thickness of the inorganic thin film layer is 1 nm or more, it becomes easy to obtain more satisfactory gas barrier properties. Meanwhile, when the film thickness is 100 nm or less, an advantage is obtained in terms of bending resistance and manufacturing cost.

A method for forming the inorganic thin film layer is not particularly limited, and, for example, it is possible to employ, as appropriate, a known vapor deposition method such as: a physical vapor deposition method (PVD method) such as a vacuum deposition method, a sputtering method, or an ion plating method; or a chemical vapor deposition method (CVD method). When an inorganic thin film layer is provided, it is preferable to provide a protective layer on the inorganic thin film layer. A gas barrier layer made from a metal oxide is not a completely dense film, and minute defect portions are interspersed therein. By applying a particular protective layer resin composition described later on the metal oxide layer so as to form a protective layer, a resin in the protective layer resin composition permeates the defect portions of the metal oxide layer. As a result, an effect of stabilizing the gas barrier properties is obtained. In addition, if a material having gas barrier properties is used also for the protective layer itself, the gas barrier performance of the layered film is also significantly improved. Examples of the protective layer include protective layers each obtained by adding a curing agent such as an epoxy-based curing agent, an isocyanate-based curing agent, or a melamine-based curing agent to a resin such as a urethane-based resin, a polyester-based resin, an acrylic-based resin, a titanium-based resin, an isocyanate-based resin, an imine-based resin, or a polybutadiene-based resin.

The layered body obtained by stacking the metal layer on the biaxially-oriented polyester film of the present invention preferably has a higher elongation at break since a higher elongation at break leads to more favorable deep drawability. The lower limit of the tensile elongation at break of a layered body obtained by stacking the biaxially-oriented polyester film/adhesive/metal layer/adhesive/sealant layer in this order is preferably 30%, more preferably 32%, and particularly preferably 34%. Setting the tensile elongation at break to be 30% or more enables the layered body to be sufficiently elongated, whereby the deep drawability becomes favorable. The upper limit of the tensile elongation at break of the above layered body is preferably 50%, more preferably 48%, and particularly preferably 46%. Setting the tensile elongation at break to be 50% or less enables the mechanical strength of the layered body to be high, whereby troubles such as formation of a pinhole at the time of deep drawing can be prevented.

The layered body of the present invention is suitably used for deep drawing in which a recess is molded using a mold, and the deep-drawn layered body is used for various packaging materials.

EXAMPLES

Next, the present invention will be described in more detail by means of examples. However, the present invention is not limited to the following examples.

[Thickness of film]

Measurement was performed by using a dial gauge in compliance with method A in JIS K 7130-1999 A.

[Reversible heat capacity difference ΔCp at around glass transition temperatures]

A replacement blade for a razor was used to cut portions out of surfaces of the base material layer and the easily adhesive layer of the biaxially-oriented polyester film, and each of the cut portions was used as a measurement sample. The base material layer was collected from the exposed base material layer surface after sufficiently scraping the surface of the easily adhesive layer.

Using the temperature-modulated differential scanning calorimeter (DSC) "DSC250" (manufactured by TA Instruments), $5.0 \pm 0.2$ mg of the sample was weighed out to be put into a hermetic aluminum pan, and measurement was performed at an average temperature increase rate of 2.0°C/min and at a modulation cycle of 60 seconds in the MDSC (registered trademark) Heat-Only mode. Consequently, a reversible heat capacity curve was obtained. An inflection point in the obtained heat capacity curve was determined by using attached analysis software (TA Analysis manufactured by TA Instruments), and, as the difference between heat capacities before and after the inflection point (glass transition temperature: abbreviated as Tg), a reversible heat capacity difference was obtained according to an expression described below. Here, the above inflection point refers to a point that, in a case where the reversible heat capacity curve is an ideal curve with no protrusion or recess, takes a value of 0 when the reversible heat capacity curve is differentiated two times.

Reversible heat capacity difference ΔCp = (heat capacity on high temperature side relative to Tg) - (heat capacity on low temperature side relative to Tg)

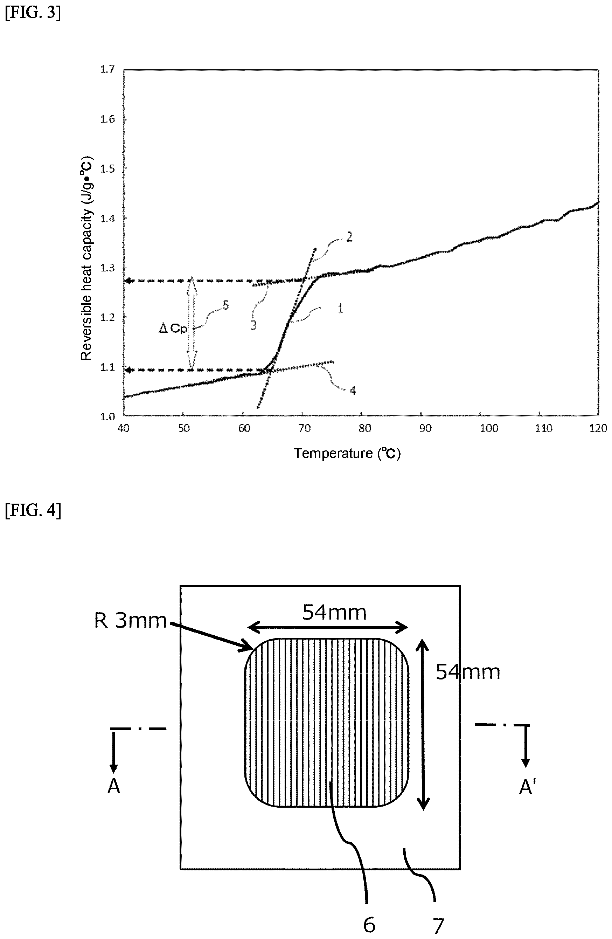

A measurement example of the reversible heat capacity difference is shown in FIG. 3. Here, an extension line of a baseline of the heat capacity curve on the high-temperature side relative to Tg in the heat capacity curve is drawn. A line obtained by performing, through the least-squares method, linear fitting of the baseline of the heat capacity curve within a range from Tg + 5°C to Tg + 15°C is defined as an extension line 3 of the aforementioned baseline of the heat capacity curve on the high-temperature side relative to Tg. Then, an intersection point of the extension line 3 with a tangent line 2 at the inflection point (Tg) is obtained, and the value on the Y axis (reversible heat capacity) at the intersection point is read and used as a high-temperature-side heat capacity. Then, an extension line of a baseline of the heat capacity curve on the low-temperature side relative to Tg is drawn. Here, a line obtained by performing, through the least-squares method, linear fitting of the baseline of the heat capacity curve within a range from Tg - 15°C to Tg - 5°C is defined as an extension line 4 of the aforementioned baseline of the heat capacity curve on the low-temperature side relative to Tg. Then, an intersection point of the extension line 4 with the tangent line 2 at the inflection point 1 (Tg) is obtained, and the value on the Y axis (reversible heat capacity) at the intersection point is read and used as a low-temperature-side heat capacity. Thus, the difference between the values of the high-temperature-side heat capacity and the low-temperature-side heat capacity was regarded as the heat capacity difference ΔCp.

Also, it was confirmed that measurement was able to be normally performed without any disarray in baseline shift of the above reversible heat capacity measurement.

[Molecular orientation ratio of film MOR]

By using an MOA-6004 type molecular orientation meter manufactured by Oji Scientific Instruments, a molecular orientation ratio (the ratio of a maximum value to a minimum value of a transmitted microwave intensity measured by using the molecular orientation meter) (maximum value/minimum value) of each biaxially-oriented polyester film was obtained.

[Stress at 10% elongation of film F10]

Samples each having a width of 15 mm and a length of 180 mm were cut out from each biaxially-oriented polyester film. Each of the samples having been cut out was aged for 12 hours in an atmosphere of 23°C and 65%RH, and then measurement was performed in an atmosphere of 23°C and 65%RH and under a condition of a chuck spacing of 100 mm and a tension speed of 360 mm/min. The measurement was repeated five times, and the average value of stresses at which the film was elongated by 10% (stresses at 10% elongation) was used. As a measurement device, AUTOGRAPH (registered trademark) AG-1 manufactured by SHIMADZU CORPORATION was used.

[Haze of film]

Each biaxially-oriented polyester film was cut into a square shape with each side thereof measuring 10 cm, and haze measurement was performed by using the haze meter NDH2000 manufactured by NIPPON DENSHOKU INDUSTRIES Co., Ltd., in compliance with JIS K 7361-1. The haze measurement was performed at three locations, and the average value of the measurement results at the three locations was regarded as an actually measured haze value.

[Dynamic coefficient of friction of film]

A dynamic coefficient of friction at the time of joining the front surface and the back surface of each biaxially-oriented polyester film was obtained in an environment of 23°C and 65%RH by using a tensile tester (TENSILON RTG-1210 manufactured by A&D Company, Limited) in compliance with JIS K-7125. The weight of a sled (weight), on an upper side, around which the film was wound was 1.5 kg, and the magnitude of the base area of the sled was 39.7 mm$^2$. The tension speed at the time of friction coefficient measurement was 200 mm/min.

[Heat shrinkage rate of film]

Measurement of the heat shrinkage rate was performed according to a dimensional change test method that complies with JIS-C-2318 except that: the test temperature was set to 150°C; and the heating time was set to 15 minutes.

[Heat sealing strength of film]

The heat sealing strength was measured in compliance with JIS Z1707. A specific procedure is shown below. Easily adhesive layer surfaces were adhered to each other with a heat sealer. The heat sealing condition was: an upper bar temperature of 120°C; a lower bar temperature of 30°C; a pressure of 0.2 MPa; and a time of 2 seconds. The adhesion sample was cut out so that the seal width was 15 mm. The peel strength was measured at a tensile speed of 200 mm/min using the tensile tester "AGS-KNX" (manufactured by SHIMADZU CORPORATION). Peel strength is indicated by strength per 15 mm (unit: N/15 mm).

[Observation of thickness of sealing layer of film]

An observation sample was cut out from an unstretched sheet before being stretched. The observation sample was reinforced with a UV-curable resin (epoxy acrylate resin) and then hardened by UV irradiation. In order to make the thickness cross-section of the sample observable, a cross section was exposed using the microtome "RX-860" (manufactured by YAMATO KOHKI INDUSTRIAL CO., LTD.). Subsequently, the cross section of the sample for which the cross section was exposed was observed using the industrial microscope "ECLIPSE LV150N" (manufactured by NIKON CORPORATION). From the microscope image, a thickness ratio of the base material layer and the easily adhesive layer of the unstretched sheet was calculated, and the thickness ratio was multiplied by the thickness of the film after being biaxially stretched, and the thickness of each layer of the biaxially-oriented polyester film was calculated.

[Evaluation of film curling property]

A square sample with sides of 10 cm was cut out from each biaxially-oriented polyester film. The height of the rise of the sample from the table top when the sample was placed on a flat table was measured. The same measurement was performed for both faces of the sample, and the largest value was used as a measurement value of the sample. The evaluation results were evaluated based on the following criteria.

Height of rise is less than 5 mm: A
Height of rise is 5 mm or more: C

[Manufacturing of layered body]

On a surface of an easily adhesive layer of a biaxially-oriented polyester film, a urethane-based two-component curing type adhesive (obtained by blending "TAKELAC (registered trademark) A525S" and "TAKENATE (registered trademark) A50" manufactured by Mitsui Chemicals, Inc. in a ratio of 13.5 : 1.0 (mass ratio)) and "Aluminum Foil CE 8079" manufactured by TOYO ALUMINIUM K.K. having a thickness of 40 $\mu$m were attached together by a dry lamination method. Subsequently, on the aluminum layer side of the above layered body, in the same manner, the urethane-based two-component curing type adhesive and an unstretched polypropylene film ("P1147" manufactured by TOYOBO CO., LTD.) having a thickness of 70 μm were attached together by a dry lamination method. This layered body was aged for four days at 40°C, to obtain a laminate layered body. The attaching of the biaxially-oriented polyester film and the unstretched polypropylene film was all performed while the films were aligned in each of the machine direction and the transverse direction. The thicknesses after drying of adhesive layers formed with the urethane-based two-component curing type adhesive were each about 4 μm.

[Tensile elongation at break of layered body]

A sample measuring 15 cm in the transverse direction and 180 mm in the machine direction was cut out from the above-described laminate layered body. The cut-out sample was aged for 12 hours in an atmosphere of 23°C and 65%R.H., and then measurement was performed in an atmosphere of 23°C and 65%RH and under a condition of a chuck spacing of 100 mm and a tension speed of 360 mm/min. The measurement was repeated five times, and the average value of elongations at which the aluminum layer was broken was regarded as the tensile elongation at break of the laminate layered body. As a measurement device, AUTOGRAPH (registered trademark) AG-1 manufactured by SHIMADZU CORPORATION was used.

[Evaluation of deep drawability of layered body]

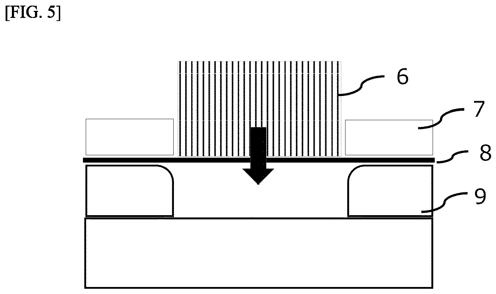

A sample measuring 10 cm in the machine direction and 10 cm in the transverse direction was cut out from the above-described laminate layered body. The sample was set on a mold shown in FIG. 4 and was pressed from above to perform drawing. FIG. 5 is a crosssectional view of the mold. Specifically, the laminate layered body was placed on the mold having a height of 54 mm, a width of 54 mm, a depth of 12 mm, and four corners each having R = 3 mm, and, in the state where the laminate layered body was restrained by a film restrainer, the laminate layered body was pressed by using a punch having a shape corresponding to the shape of the mold. The drawing speed was 6 mm/s. Evaluation was performed at N = 10, and a maximum drawing depth obtained when neither a film rupture nor a pinhole was generated at N = 10, was regarded as a deep drawing value of the sample.
When the deep drawing value was 3.5 mm or more, the sample was evaluated as practical.

[Example 1]

A three-layer configuration including an easily adhesive layer as a layer B/a base material layer as a layer A/an easily adhesive layer as a layer B was obtained. A PET resin (composed of terephthalic acid//ethylene glycol = 100//100 (mol%), having an intrinsic viscosity of 0.62 dl/g, and having silica particles blended therein) and a PBT resin (composed of terephthalic acid//butanediol = 100//100 (mol%) and having an intrinsic viscosity of 1.28 dl/g) were put into an extruder 1 for forming the base material layer as the layer A. Next, a PET resin (composed of terephthalic acid//ethylene glycol = 100//100 (mol%), having an intrinsic viscosity of 0.62 dl/g, and having silica particles blended therein) and a copolymerized PET resin (composed of terephthalic acid//ethylene glycol/diethylene glycol = 100//60/40 (mol%) and having an intrinsic viscosity of 0.62 dl/g) were put into an extruder 2 for forming the easily adhesive layer as the layer B, in such a ratio that the diethylene glycol component content of the layer B became 17 mol%. In each extruder, the resins were melted at 280°C, and then a merging device caused the layer A and the layer B to merge. The resultant resin was cast from a T-die at 280°C and adhered to a cooling roll at 10°C through an electrostatic adhesion method. Consequently, an unstretched sheet having a three-layer configuration was obtained. In each of the layers, the silica particle content with respect to 100% by mass of the entire resin composition in the layer was set to 0.1% by mass as a silica concentration.
Then, the obtained unstretched sheet was subjected to 4.0 times stretching in the MD direction at a temperature of 115°C. Then, the sheet was caused to pass through a tenter with a linear stretch pattern so as to be subjected to 4.1 times stretching in the TD direction at 110°C and was, at 190°C, subjected to heat setting treatment for 3 seconds and 5% relaxation treatment for 1 second. Consequently, a biaxially-oriented polyester film having a thickness of 25 μm was obtained. The resin composition of, and the film production conditions for, the biaxially-oriented polyester film are indicated in Table 1. In addition, physical properties and evaluation results of the obtained film are indicated in Table 1.

[Example 2]

Film production was performed in the same manner as in Example 1 except that the stretch pattern of the tenter was changed to a logarithmic pattern. Consequently, a biaxially-oriented polyester film having a thickness of 25 μm was obtained. Physical properties and evaluation results of the obtained film are indicated in Table 1.

[Example 3]

Film production was performed in the same manner as in Example 1 except that the stretch pattern of the tenter was changed to an exponential pattern. Consequently, a biaxially-oriented polyester film having a thickness of 25 $\mu$m was obtained. Physical properties and evaluation results of the obtained film are indicated in Table 1.

[Example 4]

Film production was performed in the same manner as in Example 1 except that the film production conditions were changed to those indicated in Table 1. Consequently, a biaxially-oriented polyester film having a thickness of 25 $\mu$m was obtained. Physical properties and evaluation results of the obtained film are indicated in Table 1.

[Examples 5, 6]

Film production was performed in the same manner as in Example 1 except that the weight proportions of the raw materials put into the extruder 2 were changed such that the diethylene glycol component content in the easily adhesive layer as the layer B took the value indicated in Table 1. Consequently, a biaxially-oriented polyester film having a thickness of 25 $\mu$m was obtained. Physical properties and evaluation results of the obtained film are indicated in Table 1.

[Example 7]

Film production was performed in the same manner as in Example 1 except that the thicknesses of the base material layer as the layer A and the easily adhesive layer as the layer B were changed to those indicated in Table 1. Consequently, a biaxially-oriented polyester film having a thickness of 25 $\mu$m was obtained. Physical properties and evaluation results of the obtained film are indicated in Table 1.

[Example 8]

Next, an extruder 3 for forming the easily adhesive layer as the layer B was newly provided, and a PET resin (composed of terephthalic acid//ethylene glycol = 100//100 (mol%), having an intrinsic viscosity of 0.62 dl/g, and having silica particles blended therein) and a copolymerized PET resin (composed of terephthalic acid//ethylene glycol/diethylene glycol = 100//60/40 (mol%) and having an intrinsic viscosity of 0.62 dl/g) were put into the extruder 3, in such a ratio that the diethylene glycol component content of the layer B became 17 mol%. In each extruder, the resins were melted at 280°C, and then a merging device caused the layer A and the layer B to merge. The resultant resin was cast from a T-die at 280°C and adhered to a cooling roll at 10°C through an electrostatic adhesion method. Consequently, an unstretched sheet having a three-layer configuration was obtained. Film production was performed in the same manner as in Example 1 except that the discharge amount of the extruder was adjusted such that the thickness of the cooling roll contact surface and the thickness of the cooling roll noncontact surface of the easily adhesive layer as the layer B satisfy those shown in Table 1. Consequently, a biaxially-oriented polyester film having a thickness of 25 $\mu$m was obtained. Physical properties and evaluation results of the obtained film are indicated in Table 1.

[Example 9]

Film production was performed in the same manner as in Example 1 except that a PET resin (composed of terephthalic acid//ethylene glycol = 100//100 (mol%), having an intrinsic viscosity of 0.62 dl/g, and having silica particles blended therein) and a copolymerized PET resin (composed of terephthalic acid//ethylene glycol/neopentyl glycol = 100//60/40 (mol%) and having an intrinsic viscosity of 0.62 dl/g) were used and put into the extruder 2 for forming the easily adhesive layer as the layer B. Consequently, a biaxially-oriented polyester film having a thickness of 25 $\mu$m was obtained. Physical properties and evaluation results of the obtained film are indicated in Table 1.

[Examples 10, 11]

Film production was performed in the same manner as in Example 1 except that the film production conditions were changed to those indicated in Table 1. Consequently, a biaxially-oriented polyester film having a thickness of 25 $\mu$m was obtained. Physical properties and evaluation results of the obtained film are indicated in Table 1.

[Examples 12, 13]

Film production was performed in the same manner as in Example 1 except that the proportions in the resin composition in the base material layer as the layer A were changed to those indicated in Table 1. Consequently, a biaxially-oriented polyester film having a thickness of 25 $\mu$m was obtained. Physical properties and evaluation results of the obtained film are indicated in Table 1.

[Table 1A]

| | | | | | Example 1 | Example 2 | Example 3 | Example 4 |
|---|---|---|---|---|---|---|---|---|
| Film configuration | Base material layer Layer A | Composition ratio | PET | mass% | 80 | 80 | 80 | 80 |
| | | | PBT | | 20 | 20 | 20 | 20 |
| | | Thickness | | $\mu$m | 23.0 | 22.9 | 23.0 | 23.0 |
| | Easily adhesive layer Layer B | Copolymerization component ratio | Diethylene glycol | mol% | 17 | 17 | 17 | 17 |
| | | | Neopentyl glycol | | - | - | - | - |
| | | Thickness (cooling roll contact surface) | | $\mu$m | 1.0 | 1.2 | 1.0 | 1.0 |
| | | Thickness (cooling roll noncontact surface) | | $\mu$m | 1.1 | 1.1 | 1.0 | 1.1 |
| | | Difference in easily adhesive layer thickness | | $\mu$m | 0.1 | 0.1 | 0 | 0.1 |
| | Total thickness of film | | | $\mu$m | 25.1 | 25.2 | 25.0 | 25.1 |
| Stretching conditions | MD stretch ratio | | | times | 4.0 | 4.0 | 4.0 | 4.0 |
| | TD stretch ratio | | | times | 4.1 | 4.1 | 4.1 | 4.6 |
| | Ratio of stretch ratio | | TD/MD | - | 1.03 | 1.03 | 1.03 | 1.15 |
| | TD stretch pattern | | | - | Linear | Logarithmic | Exponential | Linear |
| Heat setting condition | | | Temperature | °C | 190 | 190 | 190 | 190 |
| $\triangle$ Cp at around glass transition temperature | | | Base material layer | J/g *°C | 0 | 0 | 0 | 0 |
| | | | Easily adhesive layer | | 0.29 | 0.31 | 0.25 | 0.22 |
| | | | $\triangle$ Cp | | 0.29 | 0.31 | 0.25 | 0.22 |
| Heat sealing strength | | | | N/15mm | 0.2 | 0.3 | 0.0 | 0.0 |
| Molecular orientation ratio | | | | - | 1.15 | 1.01 | 1.26 | 1.25 |
| F10 | | | MD | MPa | 105 | 107 | 107 | 107 |
| | | | TD | | 116 | 111 | 130 | 131 |
| Haze | | | | % | 3.5 | 3.3 | 3.2 | 3.2 |
| Dynamic coefficient of friction | | | | - | 0.42 | 0.40 | 0.44 | 0.44 |
| Heat shrinkage rate | | | MD | % | 4.0 | 3.9 | 4.0 | 4.0 |
| | | | TD | | 2.5 | 2.1 | 3.8 | 3.8 |

(continued)

|  |  |  | Example 1 | Example 2 | Example 3 | Example 4 |
|---|---|---|---|---|---|---|
| Curling property |  | - | A | A | A | A |
| Elongation at break of laminate layered body | MD | % | 38 | 37 | 36 | 37 |
|  | TD |  | 39 | 38 | 44 | 44 |
| Deep drawability |  | mm | 4.2 | 4.1 | 4.2 | 4.4 |

[Table 1B]

| | | | | Units | Example 5 | Example 6 | Example 7 | Example 8 |
|---|---|---|---|---|---|---|---|---|
| Film configuration | Base material layer A | Composition ratio | PET | mass% | 80 | 80 | 80 | 80 |
| | | | PBT | mass% | 20 | 20 | 20 | 20 |
| | | Thickness | | μm | 23.1 | 23.0 | 15.0 | 21.0 |
| | Easily adhesive layer B | Copolymerization component ratio | Diethylene glycol | mol% | 5 | 25 | 17 | 17 |
| | | | Neopentyl glycol | mol% | - | - | - | - |
| | | Thickness (cooling roll contact surface) | | μm | 1.1 | 1.0 | 4.9 | 1.6 |
| | | Thickness (cooling roll noncontact surface) | | μm | 1.1 | 1.0 | 5.0 | 2.4 |
| | | Difference in easily adhesive layer thickness | | μm | 0 | 0 | 0.1 | 0.8 |
| | Total thickness of film | | | μm | 25.3 | 25.0 | 24.9 | 25.0 |
| Stretching conditions | MD stretch ratio | | | times | 4.0 | 4.0 | 4.0 | 4.0 |
| | TD stretch ratio | | | times | 4.1 | 4.1 | 4.1 | 4.1 |
| | Ratio of stretch ratio | | TD/MD | - | 1.03 | 1.03 | 1.03 | 1.03 |
| | TD stretch pattern | | | - | Linear | Linear | Linear | Linear |
| Heat setting condition | Temperature | | | °C | 190 | 190 | 190 | 190 |
| ΔCp at around glass transition temperature | Base material layer | | | J/g·°C | 0 | 0 | 0 | 0 |
| | Easily adhesive layer | | | J/g·°C | 0.13 | 0.43 | 0.30 | 0.30 |
| | ΔCp | | | J/g·°C | 0.13 | 0.43 | 0.30 | 0.30 |
| Heat sealing strength | | | | N/15mm | 0 | 0.4 | 0.5 | 0.3 |
| Molecular orientation ratio | | | | - | 1.17 | 1.12 | 1.08 | 1.12 |
| F10 | MD | | | MPa | 115 | 93 | 90 | 102 |
| | TD | | | MPa | 130 | 100 | 93 | 113 |
| Haze | | | | % | 3.0 | 3.8 | 3.9 | 3.3 |
| Dynamic coefficient of friction | | | | - | 0.39 | 0.45 | 0.47 | 0.39 |
| Heat shrinkage rate | MD | | | % | 3.5 | 4.6 | 5.5 | 4.0 |
| | TD | | | % | 2.2 | 3.1 | 4.1 | 2.7 |

|  |  | | Example 5 | Example 6 | Example 7 | Example 8 |
|---|---|---|---|---|---|---|
| Curling property | | - | A | A | A | A |
| Elongation at break of laminate layered body | MD | % | 37 | 34 | 31 | 33 |
| | TD | | 42 | 38 | 33 | 37 |
| Deep drawability | | mm | 4.3 | 4.0 | 3.6 | 4.1 |

[Table 1C]

| | | | | | Example 9 | Example 10 | Example 11 | Example 12 | Example 13 |
|---|---|---|---|---|---|---|---|---|---|
| Film configuration | Base material layer Layer A | Composition ratio | PET | mass% | 80 | 80 | 80 | 60 | 100 |
| | | | PBT | | 20 | 20 | 20 | 40 | 0 |
| | | Thickness | | $\mu$m | 22.8 | 23.0 | 23.0 | 23.2 | 23.0 |
| | Easily adhesive layer Layer B | Copolymerization component ratio | Diethylene glycol | mol% | - | 17 | 17 | 17 | 17 |
| | | | Neopentyl glycol | | 17 | - | - | - | - |
| | | Thickness (cooling roll contact surface) | | $\mu$m | 1.2 | 1.0 | 1.0 | 0.8 | 1.1 |
| | | Thickness (cooling roll noncontact surface) | | $\mu$m | 1.1 | 1.1 | 1.0 | 1.0 | 1.2 |
| | | Difference in easily adhesive layer thickness | | $\mu$m | 0.1 | 0.1 | 0 | 0.2 | 0.1 |
| | Total thickness of film | | | $\mu$m | 25.1 | 25.1 | 25.0 | 25.0 | 25.3 |
| Stretching conditions | MD stretch ratio | | | times | 4.0 | 4.4 | 4.0 | 4.0 | 4.0 |
| | TD stretch ratio | | | times | 4.1 | 4.6 | 4.1 | 4.1 | 4.1 |
| | Ratio of stretch ratio | | TD/MD | - | 1.03 | 1.05 | 1.03 | 1.03 | 1.03 |
| | TD stretch pattern | | | - | Linear | Linear | Linear | Linear | Linear |
| Heat setting condition | | | Temperature | °C | 190 | 190 | 210 | 190 | 190 |
| $\triangle$ Cp at around glass transition temperature | | | Base material layer | J/g *°C | 0 | 0 | 0 | 0 | 0 |
| | | | Easily adhesive layer | | 0.30 | 0.29 | 0.25 | 0.30 | 0.30 |
| | | | $\triangle$Cp | | 0.30 | 0.29 | 0.25 | 0.30 | 0.30 |
| Heat sealing strength | | | | N/15mm | 0.1 | 0 | 0.4 | 0.2 | 0.2 |
| Molecular orientation ratio | | | | - | 1.14 | 1.18 | 1.10 | 1.13 | 1.19 |
| F10 | | | MD | MPa | 111 | 141 | 91 | 94 | 120 |
| | | | TD | | 111 | 152 | 101 | 106 | 131 |
| Haze | | | | % | 3.1 | 2.9 | 3.3 | 3.8 | 2.9 |

EP 4 316 836 A1

(continued)

| | | Example 9 | Example 10 | Example 11 | Example 12 | Example 13 |
|---|---|---|---|---|---|---|
| Dynamic coefficient of friction | - | 0.40 | 0.40 | 0.45 | 0.45 | 0.38 |
| Heat shrinkage rate | MD % | 3.9 | 5.8 | 2.2 | 4.5 | 3.8 |
| | TD % | 2.7 | 4.1 | 1.3 | 3.1 | 2.1 |
| Curling property | - | A | A | A | A | A |
| Elongation at break of laminate layered body | MD % | 38 | 45 | 30 | 33 | 37 |
| | TD % | 41 | 44 | 33 | 37 | 39 |
| Deep drawability | mm | 4.2 | 5.0 | 4.2 | 4.2 | 4.2 |

[Comparative Example 1]

Film production was performed in the same manner as in Example 1 except that the weight proportions of the raw materials put into the extruder 2 were changed such that the diethylene glycol component content in the easily adhesive layer as the layer B took the value indicated in Table 2. Consequently, a biaxially-oriented polyester film having a thickness of 25 μm was obtained. In the obtained film, the reversible heat capacity differences ΔCp at around the glass transition was small and the adhesiveness was insufficient. Thus, the elongation at break of the layered body was low, and the deep drawability was insufficient.

[Comparative Example 2]

Film production was performed in the same manner as in Example 1 except that the weight proportions of the raw materials put into the extruder 2 were changed such that the diethylene glycol component content in the easily adhesive layer as the layer B took the value indicated in Table 2. Consequently, a biaxially-oriented polyester film having a thickness of 25 μm was obtained. In the obtained film, the stress at 10% elongation F 10 was small, and the elongation at break of the layered body was low. Therefore, not only was the deep drawability insufficient, but the blocking resistance was also insufficient due to the large sealing strength between the easily adhesive layers.

[Comparative Example 3]

Film production was performed in the same manner as in Example 1 except that a single-layer configuration composed only of the base material layer as the layer A was employed. Consequently, a biaxially-oriented polyester film having a thickness of 25 μm was obtained. The obtained film lacked an easily adhesive layer and thus had no reversible heat capacity differences ΔCp at around the glass transition; therefore, the adhesiveness was insufficient. Accordingly, the elongation at break of the layered body was low, and the deep drawability was insufficient.

[Comparative Example 4]

Film production was performed in the same manner as in Example 1 except that the thicknesses of the base material layer as the layer A and the easily adhesive layer as the layer B were changed to those indicated in Table 2. Consequently, a biaxially-oriented polyester film having a thickness of 25 μm was obtained. In the obtained film, the stress at 10% elongation F 10 was small, and the elongation at break of the layered body was low. Therefore, the deep drawability was insufficient.

[Comparative Example 5]

Film production was performed in the same manner as in Example 1 except that the film production conditions were changed to those indicated in Table 2. Consequently, a biaxially-oriented polyester film having a thickness of 25 μm was obtained. In the obtained film, the orientation ratio was high, and thus the deep drawability was insufficient.

[Comparative Example 6]

Film production was performed in the same manner as in Example 1 except that the film production conditions were changed to those indicated in Table 2. Consequently, a biaxially-oriented polyester film having a thickness of 25 μm was obtained. In the obtained film, the stress at 10% elongation F 10 was small, and the elongation at break of the layered body was low. Therefore, the deep drawability was insufficient.

[Comparative Example 7]

Film production was performed in the same manner as in Example 1 except that the proportions in the resin composition in the base material layer as the layer A were changed to those indicated in Table 2. Consequently, a biaxially-oriented polyester film having a thickness of 25 μm was obtained. In the obtained film, the stress at 10% elongation F10 was small, and the elongation at break of the layered body was low. Therefore, the deep drawability was insufficient.

[Comparative Example 8]

Next, an extruder 3 for forming the easily adhesive layer as the layer B was newly provided, and a PET resin (composed of terephthalic acid//ethylene glycol = 100//100 (mol%), having an intrinsic viscosity of 0.62 dl/g, and having silica particles blended therein) and a copolymerized PET resin (composed of terephthalic acid//ethylene glycol/diethylene glycol = 100//60/40 (mol%) and having an intrinsic viscosity of 0.62 dl/g) were put into the extruder 3, in such a ratio that the diethylene glycol component content of the layer B became 17 mol%. In each extruder, the resins were melted at 280°C, and then a merging device caused the layer A and the layer B to merge. The resultant resin was cast from a T-die at 280°C and adhered to a cooling roll at 10°C through an electrostatic adhesion method. Consequently, an unstretched sheet having a three-layer configuration was obtained. Film production was performed in the same manner as in Example 1 except that the discharge amount of the extruder was adjusted such that the thickness of the cooling roll contact surface and the thickness of the cooling roll noncontact surface of the easily adhesive layer as the layer B satisfy those shown in Table 2. Consequently, a biaxially-oriented polyester film having a thickness of 25 μm was obtained. The obtained film was insufficient in curling property.

[Table 2A]

| Film configuration | | | | | | Comparative Example 1 | Comparative Example 2 | Comparative Example 3 | Comparative Example 4 |
|---|---|---|---|---|---|---|---|---|---|
| Film configuration | Base material layer Layer A | Composition ratio | PET | | mass% | 80 | 80 | 80 | 80 |
| | | | PBT | | | 20 | 20 | 20 | 20 |
| | | Thickness | | | μm | 23.0 | 23.0 | 25.0 | 9.9 |
| | Easily adhesive layer Layer B | Copolymerization component ratio | Diethylene glycol | | mol% | 3 | 30 | - | 17 |
| | | | Neopentyl glycol | | | - | - | - | - |
| | | Thickness (cooling roll contact surface) | | | μm | 1.1 | 1.1 | - | 7.6 |
| | | Thickness (cooling roll noncontact surface) | | | μm | 1.1 | 1.0 | - | 7.7 |
| | | Difference in easily adhesive layer thickness | | | μm | 0.0 | 0.1 | | 0.1 |
| | Total thickness of film | | | | μm | 25.2 | 25.1 | 25.0 | 25.2 |
| Stretching conditions | MD stretch ratio | | | | times | 4.0 | 4.0 | 4.0 | 4.0 |
| | TD stretch ratio | | | | times | 4.1 | 4.1 | 4.1 | 4.1 |
| | Ratio of stretch ratio | | |TD/MD | | - | 1.03 | 1.03 | 1.03 | 1.03 |
| | TD stretch pattern | | | | - | Linear | Linear | Linear | Linear |
| Heat setting condition | | | | Temperature | °C | 190 | 190 | 190 | 190 |
| △Cp at around glass transition temperature | | | | Base material layer | J/g *°C | 0 | 0 | 0 | 0 |
| | | | | Easily adhesive layer | | 0.10 | 0.58 | 0 | 0.31 |
| | | | | △ Cp | | 0.10 | 0.58 | 0 | 0.31 |
| Heat sealing strength | | | | | N/ 15mm | 0 | 0.8 | 0 | 0.7 |

(continued)

| | | Comparative Example 1 | Comparative Example 2 | Comparative Example 3 | Comparative Example 4 |
|---|---|---|---|---|---|
| Molecular orientation ratio | - | 1.19 | 1.08 | 1.19 | 1.07 |
| F10 | MD | 123 | 83 | 120 | 78 |
| (MPa) | TD | 139 | 89 | 136 | 81 |
| Haze | % | 2.7 | 3.9 | 3.0 | 4.3 |
| Dynamic coefficient of friction | - | 0.37 | 0.51 | 0.36 | 0.51 |
| Heat shrinkage rate | MD | 3.1 | 5.1 | 3.2 | 5.9 |
| (%) | TD | 1.9 | 3.5 | 1.9 | 5.3 |
| Curling property | - | A | A | A | A |
| Elongation at break of laminate layered body | MD | 29 | 27 | 26 | 25 |
| (%) | TD | 30 | 29 | 26 | 28 |
| Deep drawability | mm | 3.2 | 3.1 | 3.0 | 3.0 |

24

[Table 2B]

| | | | | | Comparative Example 5 | Comparative Example 6 | Comparative Example 7 | Comparative Example 8 |
|---|---|---|---|---|---|---|---|---|
| Film configuration | Base material layer Layer A | Composition ratio | PET | mass% | 80 | 80 | 40 | 80 |
| | | | PBT | | 20 | 20 | 60 | 20 |
| | | Thickness | | μm | 23.0 | 23.1 | 23.2 | 21.0 |
| | Easily adhesive layer Layer B | Copolymerization component ratio | Diethylene glycol | mol% | 17 | 17 | 17 | 17 |
| | | | Neopentyl glycol | | - | - | - | - |
| | | Thickness (cooling roll contact surface) | | μm | 1.0 | 1.1 | 1.1 | 1.5 |
| | | Thickness (cooling roll noncontact surface) | | μm | 1.0 | 0.9 | 0.8 | 2.8 |
| | | Difference in easily adhesive layer thickness | | μm | 0.0 | 0.2 | 0.3 | 1.3 |
| | Total thickness of film | | | μm | 25 | 25.1 | 25.1 | 25.3 |
| Stretching conditions | MD stretch ratio | | | times | 4.0 | 4.0 | 4.0 | 4.0 |
| | TD stretch ratio | | | times | 4.9 | 4.1 | 4.1 | 4.1 |
| | Ratio of stretch ratio | |TD/MD | - | 1.23 | 1.03 | 1.03 | 1.03 |
| | TD stretch pattern | | | - | Linear | Linear | Linear | Linear |
| Heat setting condition | | | Temperature | °C | 190 | 220 | 190 | 190 |
| ΔCp at around glass transition temperature | | | Base material layer | J/g *°C | 0 | 0 | 0 | 0 |
| | | | Easily adhesive layer | | 0.18 | 0.22 | 0.30 | 0.30 |
| | | | Δ Cp | | 0.18 | 0.22 | 0.30 | 0.30 |
| Heat sealing strength | | | | N/15mm | 0 | 0.6 | 0.2 | 0.3 |

EP 4 316 836 A1

(continued)

| | | | Comparative Example 5 | Comparative Example 6 | Comparative Example 7 | Comparative Example 8 |
|---|---|---|---|---|---|---|
| Molecular orientation ratio | | - | 1.32 | 1.08 | 1.13 | 1.11 |
| F10 | MD | MPa | 107 | 86 | 87 | 100 |
| | TD | | 130 | 93 | 93 | 113 |
| Haze | | % | 3.5 | 3.1 | 3.8 | 3.8 |
| Dynamic coefficient of friction | | - | 0.41 | 0.48 | 0.45 | 0.45 |
| Heat shrinkage rate | MD | % | 4.2 | 1.5 | 4.3 | 4.1 |
| | TD | | 3.9 | 1.0 | 2.8 | 2.9 |
| Curling property | | - | A | A | A | C |
| Elongation at break of laminate layered body | MD | % | 40 | 28 | 27 | 36 |
| | TD | | 41 | 31 | 37 | 40 |
| Deep drawability | | mm | 2.9 | 3.4 | 3.3 | 4.3 |

DESCRIPTION OF REFERENCE SIGNS

1 inflection point (Tg)

2 tangent line at inflection point (Tg)

3 extension line of baseline of heat capacity curve on high-temperature side relative to Tg

4 extension line of baseline of heat capacity curve on low-temperature side relative to Tg

5 reversible heat capacity difference ΔCp at around glass transition temperature

6 punch

7 film restrainer

8 film layered body

9 mold

**Claims**

1. A biaxially-oriented polyester film being a layered film having at least a base material layer and two easily adhesive layers, the base material layer and the two easily adhesive layers containing a polyester as a main component, the base material layer and the two easily adhesive layers being stacked in an order of the easily adhesive layer/the base material layer/the easily adhesive layer, the biaxially-oriented polyester film satisfying all of (1) to (4) below:

   (1) a difference between reversible heat capacity differences ΔCp at around glass transition temperatures of the easily adhesive layer and the base material layer is 0.10 or more and 0.45 or less;
   (2) heat sealing strength between an easily adhesive layer of the biaxially-oriented polyester film and an easily adhesive layer of an identical biaxially-oriented polyester film is 0.5 N/15mm or less;
   (3) a stress at 10% elongation F10 in each of an MD direction and a TD direction is 90 MPa or more and 160 MPa or less; and
   (4) a molecular orientation ratio measured by using a molecular orientation meter is 1.0 or more and 1.3 or less.

2. The biaxially-oriented polyester film according to claim 1, wherein
   the base material layer contains, as the polyester, polyethylene terephthalate in an amount of 60% by mass or more and 100% by mass or less and a polyester other than polyethylene terephthalate in an amount of 0% by mass or more and 40% by mass or less.

3. The biaxially-oriented polyester film according to claim 1 or 2, wherein
   the easily adhesive layer contains, as the polyester, polyethylene terephthalate and a copolymerized polyethylene terephthalate, a content of ethylene glycol units in a diol component in the polyester is 75 to 95 mol%, and a content of a copolymerization component in the polyester is 5 to 25 mol%.

4. The biaxially-oriented polyester film according to claim 3, wherein
   the content of the ethylene glycol units in the diol component in the polyester in the easily adhesive layer is 75 to 95 mol%, and a content of diethylene glycol units and/or neopentyl glycol units in the polyester in the easily adhesive layer is 5 to 25 mol%.

5. The biaxially-oriented polyester film according to any one of claims 1 to 4, wherein
   a difference in thickness between the two easily adhesive layers in the biaxially-oriented polyester film is 1.0 μm or less.

6. A layered body comprising:

the biaxially-oriented polyester film according to any one of claims 1 to 5; and
a metal layer stacked on at least one face of the biaxially-oriented polyester film.

7. The layered body according to claim 6, wherein
the metal layer is an aluminum layer having a thickness of 80 $\mu$m or less.

8. A deep-drawn packaging material comprising the layered body according to claim 7.

[FIG. 1]

logarithmic TD pattern

ordinary TD pattern

pre-heating

stretching

heat-setting

[FIG. 2]

exponential TD pattern

ordinary TD pattern

pre-heating

stretching

heat-setting

[FIG. 3]

[FIG. 4]

[FIG. 5]

## INTERNATIONAL SEARCH REPORT

| International application No. |
|---|
| **PCT/JP2022/012053** |

| **A.** | **CLASSIFICATION OF SUBJECT MATTER** |
|---|---|

*B32B 27/36*(2006.01)i; *B32B 15/09*(2006.01)i; *B65D 65/40*(2006.01)i; *C08L 67/02*(2006.01)i
FI:   B32B27/36; B32B15/09 A; B65D65/40 D; C08L67/02

According to International Patent Classification (IPC) or to both national classification and IPC

| **B.** | **FIELDS SEARCHED** |
|---|---|

Minimum documentation searched (classification system followed by classification symbols)

B32B1/00-43/00; B65D65/00-65/46; C08L1/00-101/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | WO 2017/159582 A1 (TOYOBO CO., LTD.) 21 September 2017 (2017-09-21)<br>entire text, all drawings | 1-8 |
| A | WO 2018/021211 A1 (TOYOBO CO., LTD.) 01 February 2018 (2018-02-01)<br>entire text, all drawings | 1-8 |
| A | JP 2011-140140 A (TOYO BOSEKI) 21 July 2011 (2011-07-21)<br>entire text, all drawings | 1-8 |
| A | JP 3-169549 A (TOYO BOSEKI) 23 July 1991 (1991-07-23)<br>entire text, all drawings | 1-8 |
| A | JP 3-176146 A (TOYO BOSEKI) 31 July 1991 (1991-07-31)<br>entire text, all drawings | 1-8 |
| A | WO 2014/175313 A1 (TOYOBO CO., LTD.) 30 October 2014 (2014-10-30)<br>entire text, all drawings | 1-8 |
| A | WO 2018/150997 A1 (TOYOBO CO., LTD.) 23 August 2018 (2018-08-23)<br>entire text, all drawings | 1-8 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/012053**

| Patent document cited in search report | | | Publication date (day/month/year) | Patent family member(s) | | | Publication date (day/month/year) |
|---|---|---|---|---|---|---|---|
| WO | 2017/159582 | A1 | 21 September 2017 | US | 2019/0077136 | A1 | |
| | | | | claims, examples, figures | | | |
| | | | | EP | 3431531 | A1 | |
| | | | | CN | 108779273 | A | |
| | | | | TW | 201802155 | A | |
| WO | 2018/021211 | A1 | 01 February 2018 | US | 2020/0023626 | A1 | |
| | | | | claims, examples, figures | | | |
| | | | | TW | 201815879 | A | |
| JP | 2011-140140 | A | 21 July 2011 | (Family: none) | | | |
| JP | 3-169549 | A | 23 July 1991 | US | 5458965 | A | |
| | | | | claims, examples, figures | | | |
| | | | | EP | 712719 | A1 | |
| JP | 3-176146 | A | 31 July 1991 | US | 5458965 | A | |
| | | | | claims, examples, figures | | | |
| | | | | EP | 712719 | A1 | |
| WO | 2014/175313 | A1 | 30 October 2014 | US | 2016/0108171 | A1 | |
| | | | | claims, examples, figures | | | |
| | | | | EP | 2990455 | A1 | |
| | | | | CN | 105189687 | A | |
| | | | | TW | 201446830 | A | |
| WO | 2018/150997 | A1 | 23 August 2018 | US | 2021/0101379 | A1 | |
| | | | | claims, examples, figures | | | |
| | | | | EP | 3587107 | A1 | |
| | | | | CN | 110337365 | A | |
| | | | | TW | 201834864 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6177475 B

- JP 5891792 B